# EUROPÄISCHE PATENTSCHRIFT

(11) **EP 0 832 514 B1**
(45) Veröffentlichungstag und Bekanntmachung des Hinweises auf die Patenterteilung: **05.12.2001**
(21) Anmeldenummer: 96915996.1
(22) Anmeldetag: 13.06.1996
(51) Int. Cl.: H02P 8/22

(54) **VERFAHREN ZUR ANSTEUERUNG EINES SCHRITTMOTORS**
METHOD OF ACTUATING A STEP MOTOR
PROCEDE DE COMMANDE D'UN MOTEUR PAS A PAS

(30) Priorität: 16.06.1995 DE 19521445
(43) Veröffentlichungstag der Anmeldung: 01.04.1998
(73) Patentinhaber: Robert Bosch GmbH, 70469 Stuttgart (DE)
(72) Erfinder: STEGER, Roland, D-71093 Weil im Schönbuch (DE); KIZLER, Alfred, D-70825 Korntal-Münchingen (DE); HERZOG, Bernhard, D-70619 Stuttgart (DE)
(74) Vertreter: Friedmann, Jürgen, Dr.-Ing.
(86) Internationale Anmeldenummer: DE9601025
(87) Internationale Veröffentlichungsnummer: WO9700554

(56) Entgegenhaltungen:
- EP-A- 0 394 902
- ELEKTRONIK, Bd. 33, Nr. 7, 1984, MUNCHEN DE, Seiten 57-62, XP002010978 DIPL.-ING. PETER BAUMWOLF: "Schrittmotorsteuerung auf einem Chip"

## Beschreibung

### Stand der Technik

Die Erfindung geht aus von einem Verfahren zur Ansteuerung eines Schrittmotors nach dem Oberbegriff des Anspruchs 1 wie es bereits aus der EP-A 0 394 902 bekannt ist. In dieser Druckschrift wird eine Steuerung für einen Schrittmotor beschrieben, bei welcher die Schrittweite bestimmt wird. Bei jedem Schrittaktsignal wird der angegebene Schritt in kleinere Schritte zerlegt und diese einzelnen Teilschritte dann mit einer konstanten Verzögerungszeit ausgegeben.

Aus dem Aufsatz "Der Schrittmotor und seine Schrittdauer", Feinwerktechnik und Meßtechnik 99 (1991) 7 - 8, Seiten 327 - 332, von Klaus Mayer ist ein Schrittmotor bekannt, der einen auf einer Motorachse angeordneten permanentmagnetischen Rotor aufweist, der sich innerhalb des rotierenden Magnetfeldes zweier Spulensysteme dreht. Zur Ansteuerung dieses Motors werden die Spulen abwechselnd bestromt. Je nach Bestromungsmuster stellt sich der Rotor in einer bestimmten stabilen Position ein. Die Bewegung von einer solchen stabilen Position in die in Drehrichtung des Rotors nächste folgende stabile Position bei einem anderen Bestromungsmuster nennt man einen Schritt. Es wird dabei zwischen verschiedenen Schrittbetrieben unterschieden. Bekannt sind hierbei der Vollschrittbetrieb, der Halbschrittbetrieb und der Mikroschrittbetrieb. Der Mikroschrittbetrieb ist dadurch gekennzeichnet, daß die Bestromungsmuster für die Spulen des Schrittmotors in diskret angenäherten Sinuskurven verlaufen. Die Aufteilung einer Rotorumdrehung in einzelne Mikroschritte verbunden mit einer maximalen Drehzahl, mit der der Rotor umlaufen soll, ergibt die maximale Ansteuerschrittaktfrequenz, mit der der Schrittmotor angesteuert werden soll. Beispielsweise ergibt eine Mikroschrittgröße von 1/32° bezogen auf die Zeigerwelle eines Getriebeschrittmotors bei einer maximalen Drehwinkelgeschwindigkeit des Zeigers von 400°/s eine Ansteuerschrittaktfrequenz von 12,8 kHz für den Schrittmotor.

### Vorteile der Erfindung

Das erfindungsgemäße Verfahren zur Ansteuerung eines Schrittmotors mit den kennzeichnenden Merkmalen des Hauptanspruchs hat den Vorteil, daß trotz einer niedrigen Ansteuerschrittaktfrequenz eine höhere Ansteuerauflösung in Form kleinerer Teilschritte erfolgt, wodurch die Geräuschentwicklung des Schrittmotors, insbesondere bei niedrigen Drehzahlen, geringer ausfällt. Außerdem wird der Zeigerverlauf eines mit dem Schrittmotor drehend angetriebenen Zeigers gleichmäßiger. Des weiteren sinkt der Schaltungsaufwand, da Schaltungen, die eine niedrigere Ansteuerschrittaktfrequenz bereitstellen im allgemeinen billiger und zuverlässiger sind. Das Verfahren entlastet somit eine dem Schrittmotor vorzuschaltende Steuerschaltung, die in der Regel ein Microcontroller ist, von rechenzeitintensiven Aufgaben.

Durch die in den abhängigen Ansprüchen aufgeführten Maßnahmen sind vorteilhafte Weiterbildungen und Verbesserungen des im Hauptanspruch angegebenen Verfahrens möglich.

Wird der erste Teilschritt mit dem Schrittakt ausgeführt, so vereinfacht sich dadurch der Schaltungsaufbau, da der Schrittakt selbst für die Auslösung des ersten Teilschritts dienen kann.

Werden die Teilschritte mit einer konstanten zeitlichen Verzögerung nach dem jeweils ersten Teilschritt ausgeführt, so ergibt sich ein besonders geringer Schaltungsaufwand für die Erzeugung der Teilschrittaktimpulse.

Wird die zeitliche Verzögerung zwischen den Teilschritten mit steigender Schrittaktfrequenz reduziert, so ergibt sich dadurch eine konstante Anzahl von Teilschritten für jeden Schritt, wodurch bei steigenden Schrittaktfrequenzen keine Reduktion der Auflösung in Teilschritte erfolgt.

Der Einsatz einer PLL-Schaltung für die Erzeugung der Teilschrittaktfrequenz ist besonders vorteilhaft, da zum einen dadurch ein automatisches Nachlaufen der Teilschrittaktfrequenz mit der Schrittfrequenz erfolgt und zum anderen auch teilerfremde Frequenzverhältnisse zwischen Teilschrittaktfrequenz und Schrittaktfrequenz erreicht werden können.

Letztendlich ist die Verwendung einer monostabilen Kippstufe ein besonders preiswertes Mittel, um eine konstante Verzögerungszeit zwischen den Teilschrittimpulsen zu bewirken.

### Zeichnung

Ausführungsbeispiele der Erfindung sind in der Zeichnung dargestellt und in der nachfolgenden Beschreibung näher erläutert.

Es zeigen:
Figur 1 ein Beispiel für eine Schaltung zur Ansteuerung eines Schrittmotors,
Figur 2 den beispielhaften Verlauf mehrerer Ansteuerschrittaktimpulse und der daraufhin erfolgenden Teilschritte,
Figur 3 ein weiteres Beispiel für eine Schaltung zur Ansteuerung eines Schrittmotors.

### Beschreibung der Ausführungsbeispiele

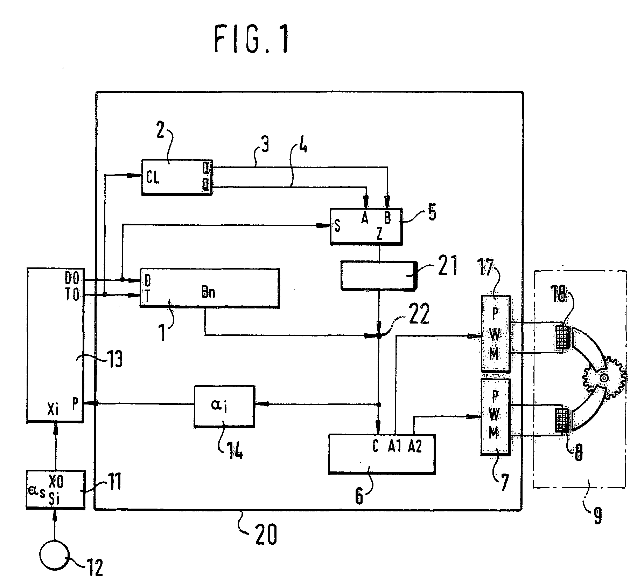

In Figur 1 ist ein erstes Ausführungsbeispiel der Erfindung dargestellt, wobei der erfindungswesentliche Gedanke in einer Ansteuerschaltung 20 integriert ist. Diese Ansteuerschaltung 20 ist zwischen einem Steuergerät 13 und einem Schrittmotor 9 angeordnet und realisert die Ansteuerung des Schrittmotores mit den im einleitenden Teil der Beschreibung erläuterten Vorteilen. Das Steuergerät 13 hat einen Eingang Xi, der mit einem Sollwinkelausgang Xo eines Sollpositionsgebers 11 verbunden, wobei an einen Sensoreingang Si des Sollpositionsgebers 11 die Signale eines Sensors 12 geführt sind. Zwei Ausgänge des Steuergerätes 13 sind an die Ansteuerschaltung 20 geführt. Dies sind der Richtungsausgang Do, der die Drehrichtung angibt, und der Taktausgang To, der für die Schrittfortschaltung verantwortlich ist. Der Richtungsausgang Do des Steuergeräts 13 ist mit einem Richtungseingang Dir eines Zählers 1 und der Taktausgang To des Steuergeräts 13 mit einem Takteingang T des Zählers 1 verbunden. Das Schrittfortschaltesignal des Taktausgangs To ist außerdem an den Löscheingang Cl einer monostabilen Kippstufe 2 geführt. Die monostabile Kippstufe 2 weist einen positiven Ausgang Q und einen invertierten Ausgang Q' auf. Der positive Ausgang Q ist über eine erste Ausgangsleitung 3 mit einem ersten Eingang B eines gesteuerten Umschalters 5 verbunden. Ebenso ist der invertierte Ausgang Q' über eine zweite Ausgangsleitung 4 mit einem zweiten Eingang A des gesteuerten Umschalters (Multiplexers) 5 verbunden. Des weiteren ist eine Verbindung zwischen dem Richtungsausgang Do und einem Wahleingang S des gesteuerten Umschalters 5 vorgesehen, welcher die Bits 1 bis n entsprechend der Winkelposition für beide Drehrichtungen zählt. Der gesteuerte Umschalter 5 weist einen Wahlausgang Z auf, der einem Zähler 21 geführt ist. Hier wird der vom Wahlausgang Z gelieferten Größe eine Bitstelle und zwar das niederwertigste Bit 0 in einer binärcodierten Größe zugewiesen. Anschließend ist der Inhalt des Zählers 21 mit dem Inhalt des Zählers 1 zusammengeführt. Da der Zähler 1 die Bitstellen Bit n bis 1 liefert, ergibt sich in einem Verknüfungspunkt die eine zusammengesetzte Binärzahl mit den Bitstellen Bit 0 bis n. Dieser gemeinsame Zählerstand ist einem Zähleingang C eines Zuordnungsmittels 6 und weiterhin über einen Istpositionsgeber 14 einem Positionseingang P des Steuergeräts 13 zugeführt. Das Zuordnungsmittel 6 weist einen ersten Ausgang A1 und einen zweiten Ausgang A2 auf, welche jeweils mit einem Pulsweitenmodulator 7, 17 verbunden sind. Jeder der Pulsweitenmodulatoren 7, 17 ist jeweils mit einer Spule 8, 18 verbunden, welche zur Bereitstellung des rotierenden Magnetfeldes eines Schrittmotors 9 dienen.

Der Sensor 12 dient zur Erfassung einer anzuzeigenden Meßgröße, beispielsweise der Drehzahl eines Fahrzeugmotors. Das Meßergebnis des Sensors 12 gelangt über den Sensoreingang Si an den Sollpositionsgeber 11, in dem eine Zuordnung des gemessenen Meßwerts zu einem Sollwinkel αₛ erfolgt. Eine solche Zuordnung kann beispielsweise mittels einer abgespeicherten Tabelle erfolgen. Der Sollwinkel αₛ entspricht der Position, die mit dem Schrittmotor 9 angefahren werden soll, damit mittels eines auf dem Schrittmotor 9, von diesem drehend angetriebenen, montierten Zeigers über einem Zifferblatt einer Person der gemessene Meßwert angezeigt werden kann. Im Steuergerät 13 erfolgt durch Differenzbildung aus dem Sollwinkel αₛ und dem Istwinkel αᵢ die Berechnung eines Differenzwinkels Δα und darauffolgend die Berechnung der zur Überstreichung dieses Winkels notwendigen Anzahl von Schritten. Im Steuergerät 13 ist zudem ein Taktgeber enthalten, der entsprechend der errechneten Anzahl von Schritten dieselbe Anzahl von Taktimpulsen für den Schrittakt zur Ansteuerung des Schrittmotors 9 bereitstellt. Dabei kann es insbesondere vorgesehen sein, daß die Schrittaktfrequenz mit steigendem Differenzwinkel Δα ebenfalls ansteigt. Dadurch wird ein einer Betrachtungsperson wohlgefälliges Zeigerverhalten erzeugt, da die Maßnahme, einen großen Winkel mit einer großen Drehgeschwindigkeit und einem kleinen Winkel mit einer kleinen Drehgeschwindigkeit zu überstreichen, ein subjektiv als angenehm empfundenes Drehverhalten des Zeigers bewirkt. Aus dem Vorzeichen des Differenzwinkels Δα ermittelt das Steuergerät 13 außerdem die Drehrichtung, in die sich der Rotor des Schrittmotors 9 bewegen soll. Die Drehrichtung wird in Form eines binären Richtungssignals über den Richtungsausgang Do einerseits dem Zähler 1 und andererseits dem gesteuerten Umschalter 5 mitgeteilt. Das Schrittaktsignal, welches über den Takteingang T des Zählers 1 zur Fortschaltung des Zählers 1 dient, dient außerdem zur Ansteuerung der monostabilen Kippstufe 2. Befindet sich diese im Ruhezustand, so liegt am positiven Ausgang Q ein logisches High-Signal (Logisch 1) und am invertierten Ausgang Q' ein logisches Low-Signal (Logisch 0). Tritt eine positive Taktflanke am Rücksetzeingang Cl auf, so wird die monostabile Kippstufe 2 für eine vorgegebene Zeitdauer zurückgesetzt, d. h. der Ausgang Q auf Logisch 0 und der invertierte Ausgang Q' auf Logisch 1 gesetzt. Bei positiver Zählrichtung bewirkt das Richtungssignal am Wahleingang S des gesteuerten Umschalters 5 eine Durchschaltung des Eingangs B auf den Wahlausgang Z. Dadurch liegt eine Verbindung zwischen dem positiven Ausgang Q und dem Zähleingang C vor. Sobald die vorgegebene Zeitdauer, die in der monostabilen Kippstufe 2 fest eingestellt ist, abgelaufen ist, kippt der positive Ausgang Q wieder auf den logischen High-Pegel zurück. Der Wahlausgang Z des gesteuerten Umschalters 5 ist auf einen Zähler 21 geführt, welcher als niederwertigstes Bit 0 mit dem Zählerstand Bit n - Bit 1 des Zählers 1 zu einem einzigen Zählerstand am Verknüpfungspunkt 22 zusammengefügt ist. der Wahlausgang Z bildet damit über den Zähler 21 den niederwertigen Teil des gemeinsamen Zählerstandes am Verknüpfungspunkt 22 und der Zählerstand des Zählers 1 bildet den höherwertigen Teil des gemeinsamen Zählerstandes am Verknüpfungspunkt 22, so daß am Verküpfungspunkt 22 der Zählerstand mit den Stellen Bit n - Bit 0 vorliegt und zum einen an den Zählereingang C des Zuordnungsmittels 6 gelangt zum anderen an den Positionseingang P des Steuergerätes 13 gelangt. Im Zuordnungsmittel 6 erfolgt eine Zuordnung des gemeinsamen Zählerstandes zu Ansteuerspannungswerten, welche über die Zuordnungsmittelausgänge A1, A2 den Pulsweitenmodulatoren 7, 17 zugeleitet werden. Die Zuordnung im Zuordnungsmittel 6 kann beispielsweise wiederum über eine dort abgespeicherte Tabelle erfolgen. Ebenso ist aber auch eine Umrechnung mittels eines im Zuordnungsmittel 6 ablaufenden Algorithmus möglich. In den Pulsweitenmodulatoren 7, 17 erfolgt eine Umwandlung der ankommenden Amplitudenwerte in pulsweitenmodulierte Signale, die den Spulen 8, 18 zugeleitet werden. Dadurch erhalten die Spulen 8, 18 genau die Bestromung, die nötig ist, um den dem gemeinsamen Zählerstand entsprechenden nächsten Positionswert anzufahren. Zudem gelangt der gemeinsame Zählerstand als Istpositionswert über den Positionseingang P an das Steuergerät 13 gelangt.

Durch diese Schaltung wird erreicht, daß bei der Weiterschaltung des Rotors mit jedem Takt des Schrittaktsignals der Schritt in Form von zwei Teilschritten ausgeführt wird. Der erste der beiden Teilschritte wird hier mit dem Schrittakt synchron ausgeführt, während der zweite Teilschritt abhängig von der Kippdauer der monostabilen Kippstufe 2 ausgeführt wird. Der Zähler 1 übernimmt dabei die Zählung der ganzen Schritte, während der gesteuerte Umschalter 5 das niederwertigste Bit des Zählvorgangs beinhaltet und dieses entsprechend umschaltet. Gemeinsam bilden das Ausgangssignal des gesteuerten Umschalters 5 und das des Zählers 1 den gemeinsamen Zählerstand für Teilschritte, der zum Zuordnungsmittel 6 gelangt, so daß zunächst nur ein halber Schritt und nach Ablauf der Kippdauer der zweite halbe Schritt erfolgt. Es ist auch vorgesehen, den Schritt in mehr als zwei Teilschritte aufzuteilen. Als Schritte im Sinne der Erfindung können je nach Anwendungsfall Voll-, Halb oder insbesondere auch Mikroschritte gesehen werden.

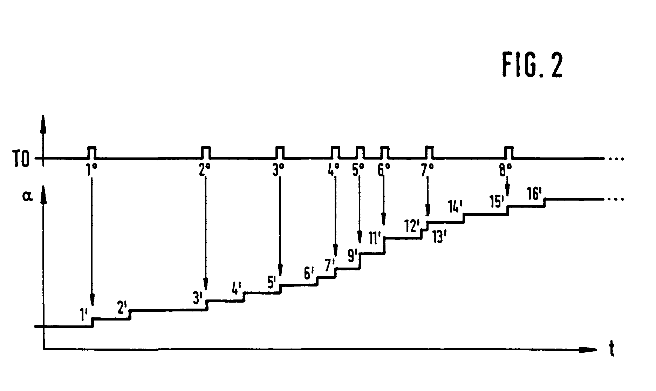

Wie in Figur 2 beispielsweise gezeigt ist, ergibt ein erster Taktimpuls 1° des Schrittaktsignals (To) einen ersten Teilschritt 1', dem in einem zeitlichen Abstand ein zweiter Teilschritt 2' folgt. Ebenso bedingt ein zweiter Taktimpuls 2° des Schrittaktsignals einen Teilschritt 3', dem wiederum in einem vorgegebenen Abstand ein weiterer Teilschritt 4' folgt. Analog gilt dies für das nächste Taktsignal 3° mit den Teilschritten 5' und 6'. Steigt nun die Schrittaktfrequenz des Schrittaktsignals an, so sinkt die Dauer zwischen zwei aufeinanderfolgenden Taktimpulsen unter den Wert der Kippzeit der monostabilen Kippstufe 2. Dadurch erfolgt hier automatisch kein weiterer Teilschritt mehr, sondern es wird sofort beim Auftreten des nächsten Taktimpulses um einen vollen Schritt weitergeschaltet. Es wird damit faktisch auf eine gröbere Schritteilung umgeschaltet. Dies ist meist jedoch unkritisch, da solche hohen Drehwinkelgeschwindigkeiten normalerweise nur sehr kurzzeitig auftreten, beispielsweise bei einem Drehzahlmesser während des Schaltvorgangs des Kraftfahrzeuges. Zudem wird die Geräuschemission mit steigender Winkelgeschwindigkeit des Rotors ohnehin immer unabhängiger von der Auflösung der Schritteilung.

Möchte man dennoch vermeiden, daß bei höheren Drehwinkelgeschwindigkeiten die Schrittaufteilung in Teilschritte verlorengeht, so läßt sich dies erreichen, indem die monostabile Kippstufe 2 und der gesteuerte Umschalter 5 durch eine PLL-Schaltungseinheit 15 ersetzt werden.

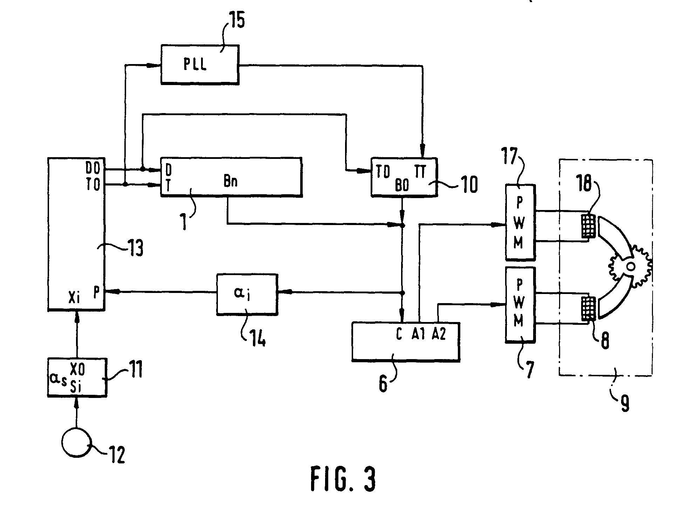

Eine solche Anordnung ist in Figur 3 dargestellt. Diese Anordnung unterscheidet sich von der Anordnung in Figur 1 durch folgende Merkmale. Anstelle der monostabilen Kippstufe 2 tritt die PLL-Schaltungseinheit 15. Außerdem wurde der gesteuerte Umschalter 5 durch einen Teilschrittzähler 10 ersetzt. Die PLL-Schaltungseinheit 15 weist einen einzigen Taktausgang auf, der einem Teiltakteingang TT des Teilschrittzählers 10 zugeführt ist. Der Richtungsausgang D ist hier zudem mit einem Teilrichtungseingang TD des Teilschrittzählers 10 verbunden. Der Teilschrittzähler 10 weist einen Teilschrittzählerausgang Bo auf, der gemeinsam mit dem Zählerausgang Bn des Zählers 1 dem Zähleingang C des Zuordnungsmittels 6 zugeführt ist. Der Teilschrittzählerausgang Bo und der Zählerausgang Bn werden dabei gemeinsam zu einem einzigen Zählerstand zusammengefügt, wobei der Zählerstand des Teilschrittzählers 10 als der niedrigere Teil des gemeinsamen Zählerstandes und der Zählerstand des Zählers 1 als der höherwertige Teil des gemeinsamen Zählerstandes verwendet wird. Dieser gemeinsame Zählerstand gelangt zum Zählereingang C des Zuordnungsmittels 6.

Durch die PLL-Schaltungseinheit 15 ist es möglich, die Schrittaktfrequenz heraufzusetzen, indem geeignete Teilerverhältnisse bei den Teilern, die in der PLL-Schaltungseinheit 15 enthalten sind, eingesetzt werden. Dadurch erhöht sich dann die Teilschrittaktfrequenz parallel zur Schrittaktfrequenz. Durch Ausführungen mit PLL-Schaltungen läßt sich außerdem durch entsprechende Auslegung eine Filterung der Teilschrittaktfrequenz erzielen, wodurch eine Einstellung des Zeigerverhaltens möglich ist. Außerdem sind die PLL-Schaltungen besonders gut geeignet, teilerfremde Verhältnisse zwischen der Schrittaktfrequenz des Schrittaktsignals To und der Teilschrittaktfrequenz einzustellen. So ist es beispielsweise möglich, als Schrittaktfrequenz 12 Schritte pro Sekunde und als Teilschrittaktfrequenz 32 Schritte pro Sekunde einzustellen. Dadurch lassen sich nahezu beliebige Adaptionen zwischen Steuergeräten 13 und Schrittmotoren 9 erreichen. Anstelle der PLL-Schaltungseinheit 15 kann auch ein anderer Frequenzvervielfacher eingesetzt werden, beispielsweise in digitaler Form.

Es ist zudem vorgesehen, daß einige Funktionen aus dem Steuergerät 13 mit in die restliche Schaltung übernommen werden, so daß dieser Schaltung z. B. nur der Sollwinkel αₛ und/oder die Sollwinkelgeschwindigkeit zugeleitet wird und sie die Schrittaktimpulse selbst erzeugt. Hier läßt sich dann mit der hier beschriebenen Schaltung erreichen, daß die Auflösung für die Schritteilung für den Schrittmotor 9 trotz einer nur geringen Datenwortbreite, welche für die Darstellung des Sollwinkels αₛ oder der Sollwinkelgeschwindigkeit am Eingang der Schaltung verwendet wird, hoch gewählt werden kann. Die Pulsweitenmodulatoren 7, 17 sind vorzugsweise als in Form einer H-Brücke verschaltete Gegentakt-Endstufen ausführbar. Beispielhaft ist diese Verfahren für Getriebeschrittmotoren in Anzeigeinstrumenten für Kraftfahrzeuge einsetzbar.

## Patentansprüche

1. Verfahren zur Ansteuerung eines Schrittmotors zum Antrieb eines Zeigers für ein Anzeigeinstrument, wobei in einem Steuergerät (13) die Schrittweite und die Drehrichtung des Schrittmotors (9) bestimmt und an eine Steueranordnung zur Ansteuerung des Schrittmotors (9) ausgegeben wird, so daß bei jedem Schrittaktsignal vom Steuergerät ein Schritt ausgeführt wird und wobei die vom Steuergerät (13) ausgegebene Schrittweite durch die Ansteuerschaltung in mehrere kleinere Schritte, deren Schrittweite kleiner als die vom Steuergerät ausgegebene Schrittweite ist, aufgeteilt wird und diese Teilschritte in Form mehrerer zeitlich versetzter Impulse von der Ansteuerschaltung an den Schrittmotor (9) ausgegeben werden, **dadurch gekennzeichnet, daß** in dem Steuergerät eine Differenz zwischen dem Sollwert und dem Istwert der Schrittposition gebildet wird und ausgehend von der Differenz die Anzahl der Teilschritte ermittelt wird, wobei die aktuelle Schrittpositon als zusammengesetzte Binärzahl vorliegt, bei welcher das niederwertigste Bit (0) von einem Umschalter (5) in Abhängigkeit von einem Richtungssignal geliefert wird und bei welcher ein Zähler (1) die höherwertigen Bits (n bis 1) liefert und daß diese zusammengesetzte Binärzahl die Schrittposition bildet, die einem Zuordnungsmittel (6), welches eine Signal zur Ansteuerung des Schrittmotors ausgibt, und dem Steuergerät (13) mitgeteilt wird.

2. Verfahren zur Ansteuerung eines Schrittmotors nach Anspruch 1, **dadurch gekennzeichnet, daß** der erste der Teilschritte mit dem Schrittakt ausgeführt wird.

3. Verfahren zur Ansteuerung eines Schrittmotors nach Anspruch 1, **dadurch gekennzeichnet, daß** der zweite und die gegebenenfalls weiteren Teilschritte jeweils mit einer in etwa konstanten zeitlichen Verzögerung nach dem ersten Teilschritt ausgeführt werden.

4. Verfahren zur Ansteuerung eines Schrittmotors nach Anspruch 1 oder 2, **dadurch gekennzeichnet, daß** die zeitliche Verzögerung zwischen den Teilschritten mit steigender Schrittaktfrequenz sinkt.

5. Verfahren zur Ansteuerung eines Schrittmotors nach Anspruch 4, **dadurch gekennzeichnet, daß** die Teilschrittaktfrequenz mittels einer PLL-Schaltungseinheit (15) aus der Schrittaktfrequenz abgeleitet wird.

## Claims

1. Method for actuating a stepping motor for driving a pointer for a display instrument, where a control unit (13) determines the step size and direction of rotation of the stepping motor (9) and outputs them to a control arrangement for actuating the stepping motor (9), so that a step is executed with each stepping clock signal from the control unit, and where the step size output by the control unit (13) is split by the actuating circuit into a plurality of smaller steps whose step size is smaller than the step size output by the control unit, and these substeps are output to the stepping motor (9) by the actuating circuit in the form of a plurality of pulses shifted in time, **characterized in that** the control unit forms a difference between the nominal value and the actual value of the stepping position, and the number of substeps is ascertained on the basis of the difference, the current stepping position being available as a composed binary number for which the least significant bit (0) is supplied by a changeover switch (5) on the basis of a direction signal, and for which a counter (1) supplies the more significant bits (n to 1), and **in that** this composed binary number forms the stepping position which is communicated to an allocation means (6) outputting a signal for actuating the stepping motor and to the control unit (13).

2. Method for actuating a stepping motor according to Claim 1, **characterized in that** the first of the substeps is executed using the stepping clock.

3. Method for actuating a stepping motor according to Claim 1, **characterized in that** the second and any further substeps are respectively executed with an approximately constant time delay after the first substep.

4. Method for actuating a stepping motor according to Claim 1 or 2, **characterized in that** the time delay between the substeps falls as the stepping clock frequency rises.

5. Method for actuating a stepping motor according to Claim 4, **characterized in that** the substepping clock frequency is derived from the stepping clock frequency using a PLL circuit unit (15).

## Revendications

1. Procédé de commande d'un moteur pas à pas pour entraîner l'aiguille d'un instrument d'affichage selon lequel :
un appareil de commande (13) détermine la largeur du pas et le sens de rotation du moteur pas à pas (9) et les fournit à un dispositif de commande pour commander le moteur pas à pas (9) pour qu'à chaque signal de pas de l'appareil de commande, celui-ci exécute un pas, et la longueur de pas fournie par l'appareil de commande (3) est subdivisée par le circuit de pilotage en plusieurs parties de pas dont la longueur est inférieure à la longueur de pas fournie par l'appareil de commande, et ces parties de pas sont fournies sous la forme de plusieurs impulsions décalées dans le temps par le circuit de commande au moteur pas à pas (9),
**caractérisé en ce que**
l'appareil de commande forme la différence entre la valeur de consigne et la valeur réelle de la position de pas et à partir de cette différence, on détermine le nombre de parties de pas,
la position actuelle de pas existant sous la forme d'un nombre binaire composé, dont le bit de plus petite valeur (O) est fourni par un commutateur (5) en fonction d'un signal de direction, et pour lequel un compteur (1) fournit les bits de valeur élevée (n à 1), et
le nombre binaire composé forme la position de pas fournie à un moyen d'association (6) donnant un signal de commande du moteur pas à pas, et fournie à l'appareil de commande (13).

2. Procédé de commande d'un moteur pas à pas selon la revendication 1,
**caractérisé en ce que**
la première partie de pas est exécutée à la cadence de pas.

3. Procédé de commande d'un moteur pas à pas selon la revendication 1,
**caractérisé en ce que**
la seconde et le cas échéant les autres parties de pas sont effectuées chaque fois avec un retard constant dans le temps après la première partie de pas.

4. Procédé de commande d'un moteur pas à pas selon l'une quelconque des revendications 1 ou 2,
**caractérisé en ce que**
le retard dans le temps entre les parties de pas diminue avec l'augmentation de la fréquence de cadences des pas.

5. Procédé de commande d'un moteur pas à pas selon la revendication 4,
**caractérisé en ce que**
la fréquence de parties de pas est déduite par une unité de circuit PLL (15) à partir de la fréquence de pas.
